# EUROPÄISCHE PATENTSCHRIFT

(11) **EP 3 794 324 B1**
(45) Veröffentlichungstag und Bekanntmachung des Hinweises auf die Patenterteilung: **24.08.2022**
(21) Anmeldenummer: 19711557.9
(22) Anmeldetag: 13.03.2019
(51) Int. Cl.: G01F 11/02

(54) **VORRICHTUNG ZUM DOSIEREN EINER FLÜSSIGKEIT, INSBESONDERE EINES PHARMAZEUTIKUMS**
DEVICE FOR METERING A LIQUID, MORE PARTICULARLY A PHARMACEUTICAL
DISPOSITIF DESTINÉ À DOSER UN LIQUIDE, EN PARTICULIER UN PRODUIT PHARMACEUTIQUE

(30) Priorität: 15.05.2018 DE 102018207521
(43) Veröffentlichungstag der Anmeldung: 24.03.2021
(73) Patentinhaber: Syntegon Technology GmbH, 71332 Waiblingen (DE)
(72) Erfinder: DUERNER, Daniel, 91522 Ansbach (DE)
(74) Vertreter: DREISS Patentanwälte PartG mbB
(86) Internationale Anmeldenummer: PCT/EP2019/056293
(87) Internationale Veröffentlichungsnummer: WO 2019/219272

(56) Entgegenhaltungen:
- WO-A1-2014/053711
- WO-A2-2007/119149
- DE-C1- 19 632 348
- DE-U1- 20 210 239
- FR-A1- 2 835 912
- FR-A1- 2 931 939

## Beschreibung

### Stand der Technik

Die vorliegende Erfindung betrifft eine Vorrichtung zum Dosieren einer Flüssigkeit, insbesondere eines Pharmazeutikums, nach der Gattung des unabhängigen Anspruchs.

Eine gattungsgemäße Dosiereinheit ist aus der DE 20210239 U1 bekannt. Diese besteht aus einem Zylindergehäuse, einem darin geführten Kolben zum Ansaugen und Ausstoßen des Pharmazeutikums und entsprechende Anschlüsse zum Zuführen und Abführen des Pharmazeutikums. Die Anschlüsse sind einstückig am Zylindergehäuse angeformt und als Einheit als spanend hergestelltes Bauteil ausgebildet. Aus der FR 2 931 939 A1 ist eine weitere Dosiereinheit bekannt.

Es ist Aufgabe der vorliegenden Erfindung, das Handling und die Funktionalität der Vorrichtung weiter zu verbessern. Diese Aufgabe wird gelöst durch die Merkmale der unabhängigen Ansprüche.

### Offenbarung der Erfindung

Die erfindungsgemäße Vorrichtung gemäß den Merkmalen des unabhängigen Anspruchs zeichnet sich durch verbessertes Handling und Funktionalität aus. Dadurch, dass zumindest einer der Anschlüsse, vorzugsweise beide, um einen von Null verschiedenen Winkel im Bereich zwischen 40° und 65° gegenüber der Senkrechten zur Achse des Drehschiebers geneigt angeordnet ist, lassen sich daran anzuschließende Schläuche oder Ähnliches beim Wechsel der Vorrichtung einfacher anbringen und entfernen. Diese Art der Anordnung eignet sich gleichermaßen für Füllvorrichtungen beim Standardeinbau wie auch beim Wandeinbau. Die Schlauchverlegung vereinfacht sich. Weiterhin erlaubt die entsprechende Anordnung der Anschlüsse ein strömungsoptimiertes Design. Dadurch können Hinterschnitte vermieden werden, wodurch sich die Luftblasenbildung verringert bzw. der Abtransport von Luftblasen verbessert. Die zu dosierende Flüssigkeit gelangt ohne große Verwirbelungen und starke Richtungsänderungen in das Innere des Zylindergehäuses. Dadurch kann die maximale Geschwindigkeit der Pumpe reduziert werden. Dies verhindert ein Ausgasen des Produkts.

In einer zweckmäßigen Weiterbildung umfasst der Drehschieber zumindest einen Kanal, der je nach Stellung des Drehschiebers mit zumindest einem der beiden Anschlüsse fluchtet, wobei der Kanal mit demselben Winkel wie der Anschluss gegenüber der Senkrechten zur Achse des Drehschiebers geneigt angeordnet ist. Dadurch wird eine Umlenkung der zu dosierenden Flüssigkeit weiter vermieden, was sich ebenfalls wie oben bereits ausgeführt positiv auf das strömungsoptimierte Design niederschlägt. Außerdem kann bei diesem Design auf ein Druckstück im Drehschieber verzichtet werden, was die Reinigbarkeit verbessert.

In einer zweckmäßigen Weiterbildung liegt der Winkel im Bereich zwischen 45° und 60°, besonders bevorzugt bei 45°. Bei einer entsprechend fluchtenden Auslegung des Kanals im Drehschieber lassen sich damit geringe Baulängen der Vorrichtung erzielen, ohne auf die strömungstechnischen Vorteile verzichten zu müssen.

In einer zweckmäßigen Weiterbildung sind beide Anschlüsse mit demselben Winkel geneigt gegenüber der Senkrechten der Achse angeordnet und/oder bezogen auf eine Rotation um die Achse um 180° zueinander versetzt angeordnet. Dadurch kann das Handling beim Ein- und Ausbau durch eine einheitliche Gestaltung weiter vereinfacht werden. Gerade eine 180°-Umsteuerung des Drehschiebers verbessert die Dichtigkeit und Füllgenauigkeit. Die Dichtflächen lassen sich dadurch weiter verbessern. Auf eine weitere Umsteuergeometrie kann verzichtet werden, wodurch sich die Fertigung vereinfacht. Lediglich ein einziger Kanal ist im Drehschieber vorzusehen.

In einer zweckmäßigen Weiterbildung weist der Drehschieber zumindest eine Überdeckung auf zur Überdeckung des Zylindergehäuses. Durch diese Labyrinthdichtung kann das Eindringen von Partikeln ins Innere des Zylindergehäuses vermieden werden. Damit erhöht sich die Produktionssicherheit beim Abfüllen von Flüssigkeiten.

Bei einer nicht erfindungsgemäßen Weiterbildung ist zumindest eine Sicherung, insbesondere eine Kolbensicherung, vorgesehen zur lösbaren Fixierung des Kolbens am Zylindergehäuse. Dies ermöglicht einen einfacheren Einbau der Dosiereinheit in die Füllstation. Die Kolbensicherung verhindert das Herausfallen des Kolbens beim Transport bzw. beim Einbau der Dosiereinheit. Besonders bevorzugt kann die Kolbensicherung auch zur Kollisionsvermeidung zwischen Kolben und Drehschieber verwendet werden, insbesondere durch Vorsehen eines Absatzes am Kolben. Der Absatz am Kolben kollidiert im Schadensfall zunächst mit dem Zylindergehäuse, sodass es zu keinen Beschädigungen zwischen Kolben und Drehschieber kommt. Die Sicherheit der Anordnung verbessert sich weiter.

In einer zweckmäßigen Weiterbildung ist zumindest eine Sicherung, insbesondere eine Verliersicherung, vorgesehen zur Sicherung eines Verbindungsmittels, insbesondere eines Bolzens, zwischen dem Drehschieber und einem den Drehschieber betätigenden Antriebsmittel. Damit wird sichergestellt, dass beim Einbau bzw. Ausbau der Dosiereinheit nicht der Bolzen verloren werden kann, was die Sicherheit der Montage weiter verbessert. Außerdem kann der Bolzen im laufenden Betrieb nicht bei hohen Umfangsgeschwindigkeiten und damit verbundenen hohen Zentrifugalkräften aus der Verbindung gelangen. Ein Herausfallen des Bolzens im laufenden Betrieb wird damit unterbunden.

In einer zweckmäßigen Weiterbildung ist zumindest eine Einführhilfe, insbesondere eine Einführschräge, am Kolben und/oder am Zylindergehäuse und/oder am Drehschieber vorgesehen. Dadurch ist ein beschädigungsfreies Fügen der Teile möglich. Am Zylindergehäuse ist eine Durchmessererweiterung für den Drehschieber realisiert. Zudem hat der Kolben einen Einführkonus erhalten.

In einer zweckmäßigen Weiterbildung umfasst die Sicherung zumindest einen Pin, der mit einer Ausnehmung zusammenwirkt. Damit wird in besonders einfacher Art und Weise eine Verliersicherung für den Bolzen erreicht. Besonders zweckmäßig ist die Sicherung als Bajonettverschluss ausgebildet, was ein sicheres und zuverlässiges Handling ermöglicht.

In einer zweckmäßigen Weiterbildung ist zumindest eine Aufnahme für ein Befestigungsmittel und/oder eine Abflachung am Zylindergehäuse vorgesehen. Dies ermöglicht eine genaue Positionierung des Kolbens und/oder des Zylindergehäuses zur vereinfachten Montage.

In einer zweckmäßigen Weiterbildung weist der Drehschieber zumindest einen trichterförmigen Endbereich auf zur Bildung eines Freiraums für die zu dosierende Flüssigkeit. Dies trägt weiter zu einem strömungsoptimierten Design mit den bereits oben genannten Vorteilen bei.

In einer zweckmäßigen Weiterbildung ist zumindest ein Verschleißschutz des Zylindergehäuses und/oder des Drehschiebers und/oder des Kolbens vorgesehen, insbesondere durch bestimmte Härteverfahren. Dadurch kann beispielsweise auf einen Verschleißschutz aus Hartchrom verzichtet werden. Die Dichtwirkung erhöht sich. Als Abwandlung sind auch Hartchrom oder ähnliche Beschichtungen möglich, die im Lebensmittelbereich zulässig sind wie beispielsweise HALAR, DLC (Diamond Like Carbon), CrN (Chrom Nitrid), Keramikbeschichtung oder Ähnliches.

### Kurze Beschreibung der Zeichnung

Nachfolgend werden unter Bezugnahme auf die begleitende Zeichnung bevorzugte Ausführungsbeispiele der Erfindung im Detail beschrieben. In der Zeichnung ist:

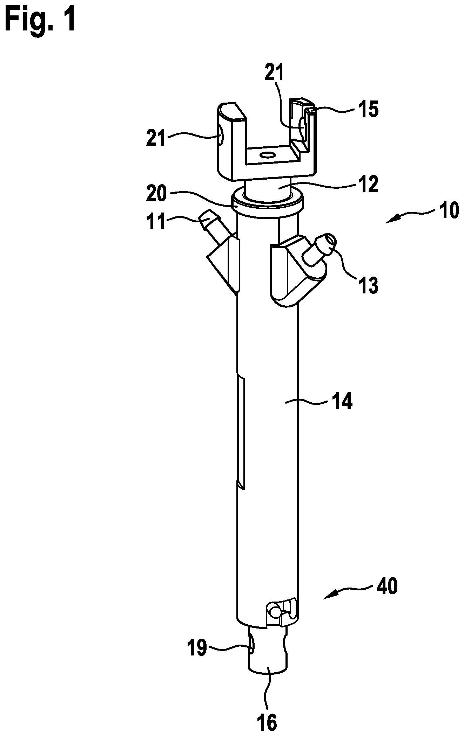

- Figur 1: eine perspektivische Ansicht der Dosiereinheit,
- Figur 2: die Dosiereinheit gemäß Figur 1 im Schnitt,
- Figur 3: eine Ansicht im Schnitt durch den Drehschieber,
- Figur 4: eine perspektivische Ansicht einer Fixierung des Drehschiebers,
- Figur 5: eine weitere perspektivische Ansicht der Fixierung des Drehschiebers im fixierten Zustand,
- Figur 6: eine genauere Darstellung des Drehschieber im Schnitt im Übergangsbereich zum Kolben,
- Figur 7: eine perspektivische Ansicht einer Kolbenpositionierung,
- Figur 8: eine perspektivische Ansicht einer nicht erfindungsgemäßen Kolbensicherung im gesicherten Zustand,
- Figur 9: eine weitere perspektivische Ansicht einer nicht erfindungsgemäßen Kolbensicherung im gelösten Zustand,
- Figur 10: eine perspektivische Ansicht der Dosiereinheit zusammen mit den Haltern sowie
- Figur 11: eine perspektivische Ansicht einer Füllstation mit mehreren eingebauten Dosiereinheit.

### Bevorzugte Ausführungsformen der Erfindung

Eine Dosiereinheit 10 umfasst zumindest einen Drehschieber 12, der an seinem oberen Ende in einem Gabelkopf 15 ausläuft. Der Gabelkopf 15 weist an seinen beiden Enden jeweils eine Öffnung 21 auf. Die Öffnung 21 ist beispielsweise kreisförmig ausgebildet. Die beiden Öffnungen 21 fluchten zueinander zur Aufnahme eines Bolzens 34. Eines der beiden Enden des Gabelkopfs 15 ist in radialer Richtung etwas dünner ausgebildet. Die so gebildete Ausnehmung 23 dient als Aufnahme eines Pins 35 für eine Verliersicherung 36.

Im mittleren Bereich weist der Drehschieber 12 zumindest eine Abdeckung 20 auf, die sich durch einen größeren Radius auszeichnet als der innen liegende Bereich des Drehschiebers 12. Die Abdeckung 20 überdeckt die obere Kante eines Zylindergehäuses 14. Außerdem weist die Abdeckung 20 seitlich einen ringförmigen Abschnitt aus, der sich in Richtung zum Zylindergehäuse 14 erstreckt und den oberen Rand des Zylindergehäuses 14 auch seitlich bzw. axial überdeckt. Der Innendurchmesser des ringförmigen Abschnitts ist etwas größer als der Außendurchmesser des Zylindergehäuses 14. Dieser ringförmige Abschnitt verhindert bzw. erschwert, dass Partikel ins Innere des Zylindergehäuses 14 gelangen. Die Abdeckung 20 mit überstehendem Ring wirkt quasi als Labyrinthdichtung zur Partikelschutzabdeckung.

Der untere Bereich des Drehschiebers 12 wird von dem Zylindergehäuse 14 aufgenommen und rotierend geführt. Der untere Bereich des Drehschiebers 12 ist somit zylinderförmig ausgebildet. Er wird in einem oberen Abschnitt des Zylindergehäuses 14 drehbar geführt. Im oberen Bereich des Zylindergehäuses 14 sind ein erster Anschluss 11 und ein weiterer Anschluss 13 angeordnet. Die Anschlüsse 11,13 sind vorzugsweise einstückig mit dem Zylindergehäuse 14 ausgebildet, also Bestandteile des Zylindergehäuses 14. Die Anschlüsse 11,13 sind mit einem gewissen Winkel 54 gegenüber der Senkrechten zu der Achse 31 des Drehschiebers 12 geneigt. Um die Achse 31 rotiert der Drehschieber 12.

Im Inneren des Zylindergehäuses 14 ist zudem ein Kolben 16 aufgenommen, dessen Ende unten über das Zylindergehäuse 14 hinausragt. Der von dem Zylindergehäuse 14 umschlossene Innenraum weist entlang seiner Achse immer denselben Radius auf. Im Innenraum des Zylindergehäuses 14 ist oben der Drehschieber 12 und unten der Kolben 16 angeordnet. Zwischen der Unterseite des Drehschiebers 12 und der Oberseite des Kolbens 16 bildet sich ein Freiraum 27 aus, in den die zu dosierende Flüssigkeit gelangt.

Entsprechende Passungs- bzw. Dichtungslängen am Kolben 16 zur Abdichtung der im Freiraum 27 befindlichen Flüssigkeit wurden fertigungstechnisch durch eine erhöhte Passungslänge im Vergleich zum Stand der Technik weiter erhöht. Damit ergibt sich eine bessere Dichtigkeit und Füllgenauigkeit. Eine weitere Erhöhung der Dichtigkeit ergibt sich, wenn sämtliche Kontaktflächen zwischen Zylindergehäuse 14 und Kolben 16 als Dichtflächen mit entsprechenden Passungen ausgebildet werden. Auf sogenannte Freiflächen, die zur fertigungstechnisch einfacheren Herstellung keine Passungen aufweisen, könnte zur weiteren Erhöhung der Dichtigkeit komplett verzichtet werden.

Der Kolben 16 weist außerdem eine nicht erfindungsgemäße Kolbensicherung 40 auf. Die Kolbensicherung 40 bietet die Möglichkeit einer lösbaren Fixierung des Kolbens 16 mit dem Zylindergehäuse 14.

Am Ende des Kolbens 16 ist zumindest eine Aufnahme 19 vorgesehen. Im Ausführungsbeispiel ist diese Aufnahme 19 zylindrisch ausgebildet. Die Aufnahme 19 ist im Wesentlichen quer zur Achse des Kolbens 19 orientiert. Außerdem ist die Aufnahme 19 außerhalb des Bereichs des Kolbens 16 angeordnet, der von dem Zylindergehäuse 14 umschlossen wird. Die Aufnahme 19 dient zur Befestigung eines Antriebsmechanismus, der den Kolben 16 zur Dosierung einer Flüssigkeit bewegt. Durch eine Auf- und Abbewegung des Kolbens 16 entlang der Kolbenachse wird eine Flüssigkeit, insbesondere ein flüssiges Pharmazeutikum, aus einem nicht dargestellten Vorratsbehälter angesaugt und anschließend beispielsweise mittels einer Füllnadel einem zu befüllenden Behältnis zugeführt. Hierzu dienen die Anschlüsse 11, 13 im Zylindergehäuse 14. Über die beiden Anschlüsse 11, 13 sind Schlauchleitungen stülpbar, welche mit dem bereits erwähnten Vorratsbehälter bzw. der Füllnadel verbunden sind. Die beiden Anschlüsse 11, 13 kommunizieren in bekannter Art und Weise mit dem Freiraum 27 des Zylindergehäuses 14. Aus der Oberseite des Zylindergehäuses 14 ragt der Drehschieber 12 heraus, der über den Gabelkopf 15 drehbar ist, um je nach Stellung des Drehschiebers 12 eine Verbindung mithilfe des rotierenden Kanals 25 entweder zwischen dem einen Anschluss 11 und dem Innenraum des Zylindergehäuses 14 oder zwischen dem weiteren Anschluss 13 und dem Innenraum des Zylindergehäuses 14 herzustellen, sodass das flüssige Medium in gewünschter Weise entweder angesaugt oder ausgestoßen werden kann. Die Dosiereinheit 10 ist als Drehschieberkolbenpumpe ausgeführt.

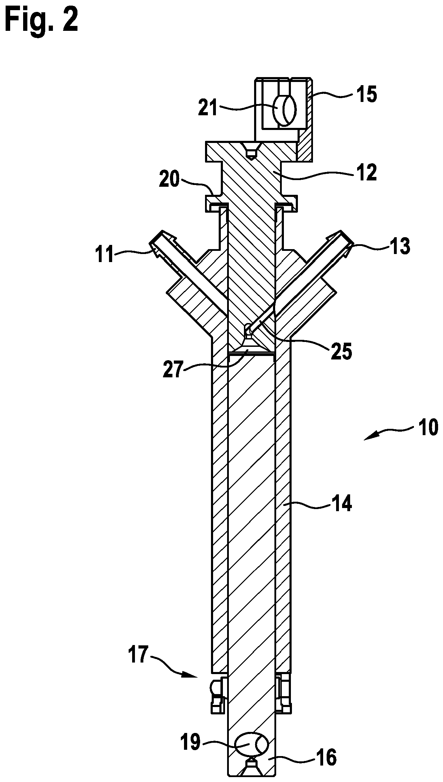

In der Figur 2 ist die Dosiereinheit 10 im Schnitt dargestellt. Daraus wird ersichtlich, dass der Drehschieber 12 im Wesentlichen denselben Durchmesser aufweist wie der Kolben 16. Außerdem umfasst der Drehschieber 12 zumindest einen Kanal 25, der je nach Stellung des Drehschiebers 12 mit zumindest einem der Anschlüsse 11,13 zusammenwirkt. Der Kanal 25 ist beispielsweise als Nut gebildet. Im Ausführungsbeispiel gemäß Figur 2 fluchtet der Kanal 25 mit dem Anschluss 13. Der Kanal 25 mündet im mittleren Bereich des Drehschiebers 12 in den Freiraum 27. Der Freiraum 27 ist im Wesentlichen kegelförmig ausgebildet. Der Freiraum 27 wird nach unten hin begrenzt durch die Oberseite des Kolbens 16. Der Freiraum 27 ist vorzugsweise rotationssymmetrisch. Der Freiraum 27 ist im Ausführungsbeispiel durch zwei unterschiedliche Winkelbereiche gebildet. Der Drehschieber 12 läuft an seinem unteren Ende in dem Freiraum 27 aus, vorzugsweise in einer rotationssymmetrischen Kontur, insbesondere trichterförmig. Die Stirnseiten des Drehschiebers 12 und die Stirnseite des Kolbens 16, die dem Drehschiebers 12 zugewandt ist, weisen einen gewissen Abstand voneinander auf. Seitlich wird die Freifläche 27 begrenzt vom Inneren des Zylindergehäuses 14.

Durch einen Absatz 17 im unteren Bereich des Kolbens 16 wird außerdem sichergestellt, dass die Oberseite des Kolbens 16 mit der Unterseite des Drehschiebers 12 nicht in Kontakt kommt. Hierzu ragt der Absatz 17 radial etwas heraus und wirkt gegebenenfalls mit der Unterseite des Zylindergehäuses 14 zusammen. Eine Verschiebung des Kolbens 16 nach oben führt zu einem Anschlag des Absatzes 17 an der Stirnseite des Zylindergehäuses 14, sodass eine weitere Verschiebung des Kolben 16 nach oben und somit der Kontakt zwischen Kolben 16 und Drehschieber 12 verhindert wird. Dadurch kommt es zu keiner Beschädigung bzw. zu keiner Kollision zwischen Kolben 16 und Drehschieber 12. Der Absatz 17 kann Bestandteil der Kolbensicherung 40 sein.

Die beiden Anschlüsse 11,13 sind auf gegenüberliegenden Seiten angeordnet. Die Anschlüsse 11,13 sind somit symmetrisch in Bezug auf die Achse des Zylindergehäuses 14 relativ zueinander angeordnet. Der Drehschieber 12 vollzieht im gezeigten Ausführungsbeispiel eine Umsteuerung um 180°.

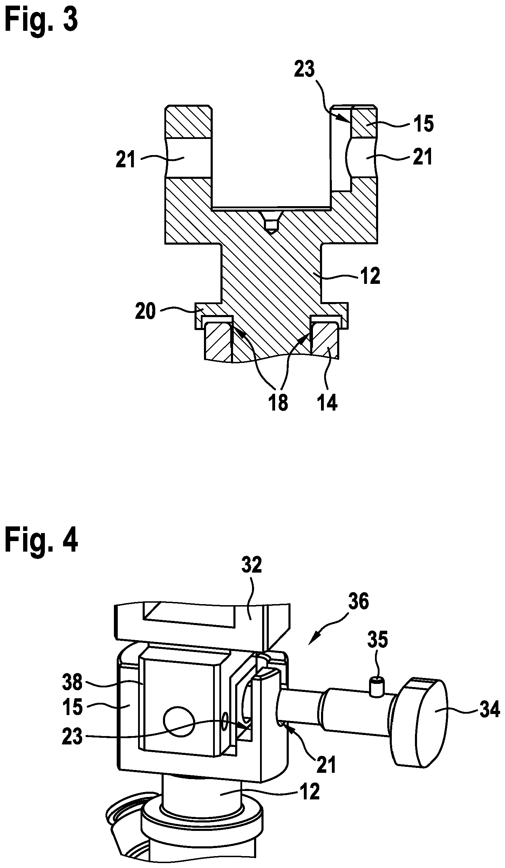

In der Figur 3 ist der Übergangsbereich zwischen Drehschieber 12 und Zylindergehäuse 14 vergrößert dargestellt. Der obere Bereich des Zylindergehäuses 14 weist an der Innenseite jeweils Einführhilfen 18 auf. Hierbei handelt es sich beispielsweise um entsprechende Abschrägungen, die ein leichteres Einführen des Drehschiebers 12 in das Zylindergehäuse 14 ermöglichen. Der Gabelkopf 15 weist an seinen Enden quer zur Achse des Drehschiebers 12 orientierte Öffnungen 21 auf, die fluchten. Die Öffnungen 21 können unterschiedliche Durchmesser aufweisen zur sicheren Aufnahme eines Befestigungsmittels 34, beispielsweise eines Bolzens, mit einer entsprechenden Kontur. Je nach Geometrie des Befestigungsmittels 34 können die Durchmesser der Öffnungen 21 auch gleich sein. Auf der rechten Seite des Gabelkopfs 15 ist eine Ausnehmung 23 ausgebildet. Diese Ausnehmung 23 dient der Aufnahme eines am Befestigungsmittel 34 angeordneten Pins 35 als Bestandteil einer Verliersicherung 36.

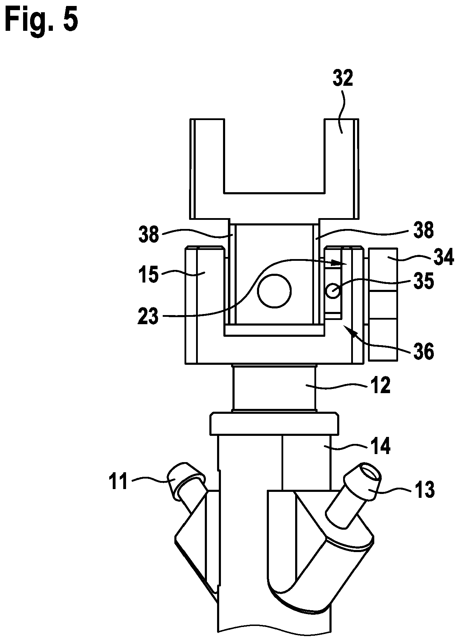

Wie in Verbindung mit den Figuren 4 und 5 gezeigt ist die eine Öffnung 21 am Gabelkopf 15 nach oben hin offen, sodass der am Bolzen bzw. Befestigungsmittel 34 angeordnete Pin 35 der Verliersicherung 36 hindurchgeschoben werden kann. Anschließend wird das Befestigungsmittel 34, das seine Endposition erreicht hat, gedreht, sodass die Verliersicherung 36 nicht mehr durch die Öffnung 21 gelangen kann. Die Verliersicherung 36 kommt in der Ausnehmung 23 zu liegen. Durch den Bolzen 34 wird ein Kreuzgelenk 32, das ebenfalls eine Öffnung aufweist, durch die der Bolzen 34 geschoben wird, mit dem Gabelkopf 15 des Drehschiebers 12 verbunden. Die entsprechende Drehbewegung des Drehschiebers 12 wird über das Kreuzgelenk 32 durch einen nicht näher gezeigten Antriebsmechanismus eingeleitet. In Figur 5 ist der montierte Zustand des Kreuzgelenks 32 gezeigt. Das Kreuzgelenk 32 weist zur einfacheren Montage und Einführung in den Gabelkopf 15 entsprechende Einführschrägen 38 auf. Die Einführschrägen 38 sind beispielsweise so ausgebildet, dass die Ecken des rechteckförmigen Unterteils des Kreuzgelenks 32 abgeschrägt wurden.

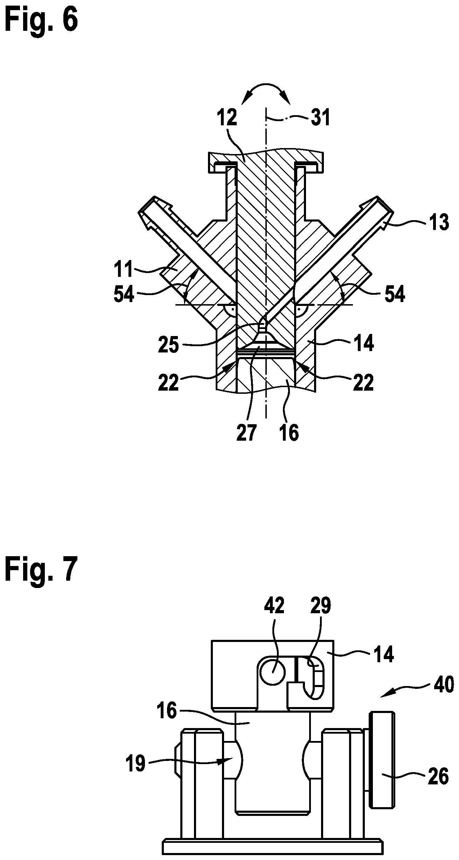

In der Schnittdarstellung gemäß Figur 6 sind der Bereich der Anschlüsse 11,13, der Drehschieber 12 mit dem Kanal 25, wie er in den Freiraum 27 mündet, sowie die Oberseite des Kolbens 16 vergrößert dargestellt. Die Anschlüsse 11,13 sind um einen von Null verschiedenen Winkel 54 gegenüber der Senkrechten zur Achse 31 des Drehschiebers 12 geneigt. Die Anschlüsse 11,13 weisen im Inneren jeweils einen Kanal auf. Im Ausführungsbeispiel ist dieser Kanal beispielsweise zylinderförmig in Form einer Bohrung ausgebildet. Der Winkel 54 zwischen der Achse des Kanals des jeweiligen Anschlusses 11,13 und der Senkrechten zur Achse 31 liegt im Ausführungsbeispiel bei ca. 45°. Der Winkel 54 kann im Bereich zwischen 65° und 40°, besonders bevorzugt zwischen 60° und 45° liegen. Der Kanal 25 im Drehschieber 12 weist denselben Winkel 54 auf wie der Winkel 54 des Kanals des Anschlusses 11,13. Damit fluchtet der Kanal des Anschlusses 11,13 mit dem Kanal 25 des Drehschiebers 12. Der Kanal 25 des Drehschiebers 25 weist im Ausführungsbeispiel einen geringfügig kleineren Durchmesser auf. Der Kanal 25 des Drehschiebers 12 kann als Bohrung oder Nut ausgebildet sein.

Die um den Winkel 54 geneigten Anschlüsse 11,13 bzw. Abgänge ermöglichen zum einen ein einfacheres Anbringen der Schläuche, insbesondere beim aseptischen Aufrüsten der Pumpe. Außerdem wird ein besseres Entlüften der Dosiereinheit 10 bzw. Pumpe möglich. Außerdem handelt es sich um ein strömungsoptimiertes Design. So werden im Gegensatz zum Stand der Technik Hinterschnitte vermieden, um den Abtransport von Luftblasen zu verbessern. Weiterhin erfolgt kein starkes Umlenken der Flüssigkeiten. Vielmehr in Zusammenwirken mit dem trichterförmigen Querschnitt des Endbereichs des Drehschiebers 12 gelangt die zu dosierende Flüssigkeit geradlinig und ohne Verwirbelungen in den Freiraum 27. Der Strömungsverlauf wurde dahingehend optimiert, dass es kaum zu Lufteinflüssen, scharfen Kanten und insbesondere zu keinen 90°-Umlenkung im Strömungskanal kommt. Dadurch kann die maximale Geschwindigkeit in der Dosiereinheit 10 reduziert werden. Dies verhindert das Ausgasen des zu dosierenden Produkts.

In der Darstellung gemäß Figur 6 ist eine Einführhilfe 22 am Kolben 16 gezeigt. Hierbei handelt es sich an der Oberseite des Kolben 16 um eine entsprechende vorzugsweise umlaufende Abschrägung, sodass der Außendurchmesser des Kolbens 16 an dessen oberem Ende abnimmt. Dadurch kann ein leichteres Einführen des Kolben 16 in das Zylindergehäuse 14 erreicht werden.

Gemäß Figur 7 verbindet ein Bolzen 26 einen nicht eigens bezeichneten Antriebsmechanismus oder eine Positionierung mit dem Kolben 16. Hierzu ist der Bolzen 26 durch Öffnungen des Antriebsmechanismus durch die Aufnahme 19 im Kolben gesteckt. Damit kann eine Auf- und Abbewegung des Antriebsmechanismus auf den Kolben 16 übertragen werden. Außerdem erfolgt eine geeignete Positionierung des Kolbens 16 durch den Bolzen 26.

In Figur 7 ist die Verliersicherung 40 zwischen Kolben 16 und Zylindergehäuse 14 näher gezeigt. Die Verliersicherung 40 umfasst zumindest einen Pin 42. Der Pin 42 ist einstückig mit dem Kolben 16 verbunden. Der Pin 42 ragt radial bezogen auf die Kolbenachse nach außen. Der Pin 42 befindet sich in einer Ausnehmung 29 im Zylindergehäuse 14. Die Ausnehmung 29 im Zylindergehäuse 14 ist im Wesentlichen J- bzw. L-förmig ausgebildet. Die Ausnehmung 29 erstreckt sich von der Unterseite des Zylindergehäuses 14 in axialer Richtung nach oben. Es schließt sich ein Abschnitt der Ausnehmung 29 in Umfangsrichtung an, die anschließend in einem teilkreisförmigen Abschnitt in axialer Richtung zum Ende des Zylindergehäuses 14 hin ausläuft. In Figur 7 ist der normale Betriebszustand gezeigt. Dieser ermöglicht eine Relativbewegung des Kolbens 16 zum Zylindergehäuse 14 in axialer Richtung.

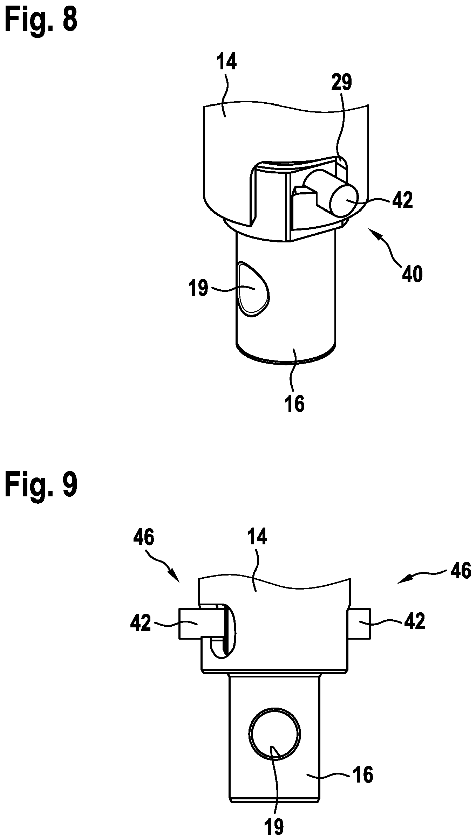

Eine Fixierung des Kolbens 16 relativ zum Zylindergehäuse 14 ist in Figur 8 gezeigt. Die Kolbensicherung 40 ist quasi als Bajonettverschluss ausgebildet. Zur Fixierung wird der Pin 42 in der Ausnehmung 29 zunächst in axialer, anschließend in radialer Richtung verschoben und gelangt in den Endbereich der Ausnehmung 29. In der fixierten Position ist ein Handling der Dosiereinheit 10 möglich wie beispielsweise der Ein- oder Ausbau.

In der Ansicht gemäß Figur 9 ist ersichtlich, dass zum vereinfachten Handling der Dosiereinheit 10 zumindest zwei Pins 42 als mögliche Handlingspunkte 46 am Kolben 16 angeordnet sind. Diese wirken wie beschrieben mit jeweils zwei Ausnehmungen 29 im Zylindergehäuse 14 zusammen. Vorzugsweise sind die Pins und die Ausnehmungen 29 genau gegenüberliegend um 180° versetzt angeordnet.

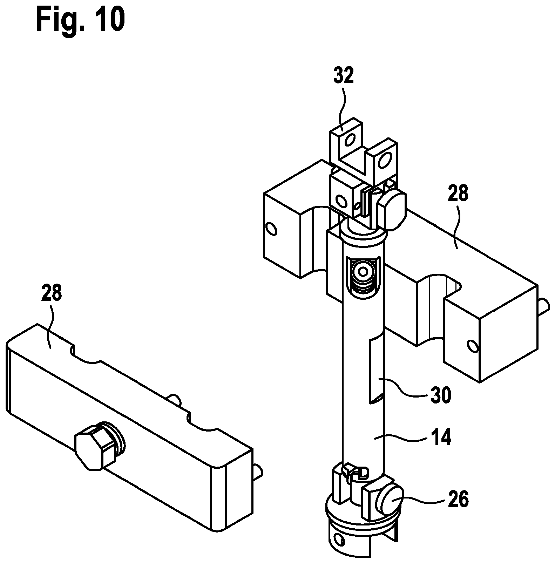

Gemäß Figur 10 sind Halterungen 28 vorgesehen mit entsprechenden Ausnehmungen zur Aufnahme der jeweiligen Dosiereinheit ziehen. Zur lagerichtigen Montage der Dosiereinheit 10 ist an der Außenseite des Zylindergehäuses 14 eine Abflachung 30 vorgesehen. An dieser Abflachung 30 gelangt die Dosiereinheit 10 in die Ausnehmung des Halters 28. Die Halterungen 28 sind so ausgebildet, dass in der Regel eine Vielzahl von Dosiereinheiten 10 darin aufgenommen werden können.

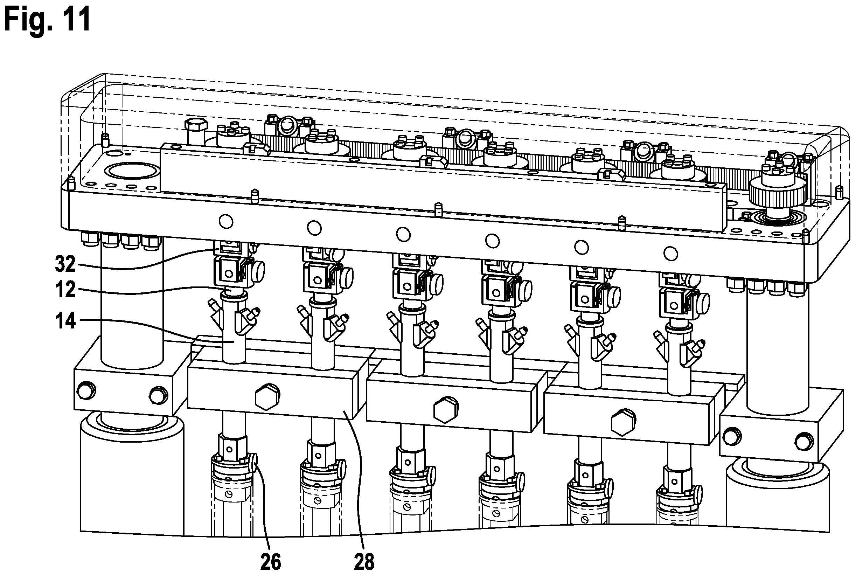

Beispielhaft ist in Figur 11 eine Füllstation 50 vorgesehen. Exemplarisch sind hier jeweils drei Halterungen 28 wie in Figur 10 gezeigt vorgesehen zur Aufnahme einer Vielzahl von Dosiereinheiten 10, im Ausführungsbeispiel sind dies sechs. Oben sichtbar ist eine Antriebseinheit zur Bewegung der Drehschieber 12. Weiterhin lassen sich dank der geneigt angeordneten Anschlüsse 11,13 die anzuschließenden Schläuche leichter anbringen und abnehmen. Die gezeigte Anordnung lässt somit einen vereinfachten Ein- bzw. Ausbau der Füllstränge gleichermaßen sowohl bei Standard- wie auch Wandeinbau zu.

Die beschriebene Vorrichtung eignet sich insbesondere zum Dosieren von Flüssigkeiten, insbesondere in der pharmazeutischen Industrie oder Lebensmittelindustrie. Die Verwendung ist jedoch hierauf nicht eingeschränkt. Die beschriebene Vorrichtung eignet sich insbesondere zum Dosieren von Flüssigkeiten, insbesondere in der pharmazeutischen Industrie oder Lebensmittelindustrie. Die Verwendung ist jedoch hierauf nicht eingeschränkt.

## Patentansprüche

1. Vorrichtung zum Dosieren einer Flüssigkeit, insbesondere eines Pharmazeutikums, umfassend zumindest ein Zylindergehäuse (14) mit zumindest zwei Anschlüssen (11,13), mit zumindest einem Drehschieber (12), der um eine Achse (31) rotierbar in dem Zylindergehäuse (14) angeordnet ist, umfassend zumindest einen axial beweglich in dem Zylindergehäuse (14) angeordneten Kolben (16), **dadurch gekennzeichnet, dass** zur Verbesserung der Entlüftung der Vorrichtung zumindest einer der Anschlüsse (11, 13), vorzugsweise beide, um einen von Null verschiedenen Winkel (54) im Bereich zwischen 40° und 65° gegenüber der Senkrechten zur Achse (31) des Drehschiebers (12) geneigt angeordnet ist.

2. Vorrichtung nach einem der vorhergehenden Ansprüche, **dadurch gekennzeichnet, dass** der Drehschieber (12) zumindest einen Kanal (25) umfasst, der je nach Stellung des Drehschiebers (12) mit zumindest einem der beiden Anschlüsse (11, 13) fluchtet, wobei der Kanal (25) mit demselben Winkel (54) wie der Anschluss (11, 13) gegenüber der Senkrechten zur Achse (31) des Drehschiebers (12) aufweist.

3. Vorrichtung nach einem der vorhergehenden Ansprüche, **dadurch gekennzeichnet, dass** der Winkel (54) im Bereich zwischen 45° und 60°, besonders bevorzugt bei 45° liegt.

4. Vorrichtung nach einem der vorhergehenden Ansprüche, **dadurch gekennzeichnet, dass** die Anschlüsse (11, 13) mit demselben Winkel (54) geneigt gegenüber die Senkrechte der Achse (31) angeordnet sind und/oder bezogen auf eine Rotation um die Achse (31) um 180° zueinander versetzt angeordnet sind.

5. Vorrichtung nach einem der vorhergehenden Ansprüche, **dadurch gekennzeichnet, dass** der Drehschieber (12) zumindest eine Überdeckung (20) aufweist zur Überdeckung des Zylindergehäuses (14) und/oder als Labyrinthdichtung ausgebildet ist und/oder zumindest einen ringförmigen Abschnitt aufweist, dessen Innendurchmesser größer ist als der Außendurchmesser des Zylindergehäuses (14).

6. Vorrichtung nach einem der vorhergehenden Ansprüche, **dadurch gekennzeichnet, dass** zumindest eine Sicherung (36), insbesondere Verliersicherung (36), vorgesehen ist zur Sicherung eines Verbindungsmittels (36), insbesondere eines Bolzens, zwischen dem Drehschieber (12) und einem den Drehschieber (12) betätigenden Antriebsmittel.

7. Vorrichtung nach einem der vorhergehenden Ansprüche, **dadurch gekennzeichnet, dass** zumindest eine Einführhilfe (22, 38), insbesondere eine Einführschräge, am Kolben (16) und/oder am Zylindergehäuse (14) und/oder am Drehschieber (12) vorgesehen ist.

8. Vorrichtung nach einem der vorhergehenden Ansprüche, **dadurch gekennzeichnet, dass** zumindest ein Absatz (17) am Kolben (16) ausgebildet ist, der mit dem Zylindergehäuse (14) zusammenwirkt zur Begrenzung einer Bewegung des Kolbens (16).

9. Vorrichtung nach einem der vorhergehenden Ansprüche, **dadurch gekennzeichnet, dass** zumindest eine Aufnahme (19) für ein Befestigungsmittel (26) vorgesehen ist.

10. Vorrichtung nach einem der vorhergehenden Ansprüche, **dadurch gekennzeichnet, dass** am Zylindergehäuse (14) zumindest eine Abflachung (30) vorgesehen ist.

11. Vorrichtung nach einem der vorhergehenden Ansprüche, **dadurch gekennzeichnet, dass** der Drehschieber (12) zumindest einen trichterförmigen Endbereich aufweist zur Bildung eines Freiraums (27) für die zu dosierende Flüssigkeit.

12. Vorrichtung nach einem der vorhergehenden Ansprüche, **dadurch gekennzeichnet, dass** zumindest ein Verschleißschutz des Zylindergehäuses (14) und/oder des Drehschiebers (12) und/oder des Kolbens (16) vorgesehen ist, insbesondere durch gehärtete Materialien und/oder Beschichtungen aus HALAR, DLC CrN, Keramik oder Hartchrom.

## Claims

1. Device for metering a liquid, in particular a pharmaceutical, comprising at least one cylinder housing (14) having at least two connections (11, 13), comprising at least one rotary valve (12) which is arranged in the cylinder housing (14) so that it can rotate about an axis (31), comprising at least one piston (16) which is arranged so that it is axially movable in the cylinder housing (14), **characterized in that** in order to improve the venting of the device, at least one of the connections (11, 13), preferably both, is arranged so as to be inclined by an angle (54) which is different to zero in the range between 40° and 65° with respect to the perpendicular to the axis (31) of the rotary valve (12).

2. Device according to any of the preceding claims, **characterized in that** the rotary valve (12) comprises at least one channel (25) which, depending on the position of the rotary valve (12), is aligned with at least one of the two connections (11, 13), the channel (25) having at the same angle (54) as the connection (11, 13) with respect to the perpendicular to the axis (31) of the rotary valve (12).

3. Device according to one of the preceding claims, **characterized in that** the angle (54) is in the range between 45° and 60°, and is particularly preferably 45°.

4. Device according to any of the preceding claims, **characterized in that** the connections (11, 13) are arranged so as to be inclined at the same angle (54) with respect to the perpendicular to the axis (31) and/or are arranged so as to be offset from one another with respect to a rotation about the axis (31) by 180°.

5. Device according to any of the preceding claims, **characterized in that** the rotary valve (12) has at least one cover (20) for covering the cylinder housing (14) and/or is designed as a labyrinth seal and/or has at least one annular portion of which the inner diameter is larger than the outer diameter of the cylinder housing (14).

6. Device according to any of the preceding claims, **characterized in that** at least one securing element (36), in particular a captive securing element (36), is provided for securing a connecting means (36), in particular a bolt, between the rotary valve (12) and a drive means which actuates the rotary valve (12).

7. Device according to any of the preceding claims, **characterized in that** at least one insertion aid (22, 38), in particular an insertion chamfer, is provided on the piston (16) and/or on the cylinder housing (14) and/or on the rotary valve (12).

8. Device according to any of the preceding claims, **characterized in that** at least one shoulder (17) is formed on the piston (16), which shoulder interacts with the cylinder housing (14) to limit a movement of the piston (16).

9. Device according to any of the preceding claims, **characterized in that** at least one receptacle (19) for a fastening means (26) is provided.

10. Device according to any of the preceding claims, **characterized in that** at least one flat portion (30) is provided on the cylinder housing (14).

11. Device according to any of the preceding claims, **characterized in that** the rotary valve (12) has at least one funnel-shaped end region for forming a space (27) for the liquid to be metered.

12. Device according to any of the preceding claims, **characterized in that** at least one wear protection of the cylinder housing (14) and/or of the rotary valve (12) and/or of the piston (16) is provided, in particular by means of hardened materials and/or coatings made of HALAR, DLC CrN, ceramic, or hard chrome.

## Revendications

1. Dispositif pour doser un liquide, en particulier un produit pharmaceutique, comprenant au moins un boîtier cylindrique (14) avec au moins deux raccords (11, 13), avec au moins une vanne rotative (12), qui est disposée dans le boîtier cylindrique (14) de manière à pouvoir tourner autour d'un axe (31), comprenant au moins un piston (16) disposé de manière axialement mobile dans le boîtier cylindrique (14), **caractérisé en ce que** pour améliorer la ventilation du dispositif au moins un des raccords (11, 13), de préférence les deux, est disposé de manière inclinée d'un angle (54) différent de zéro dans la plage comprise entre 40° et 65° par rapport aux perpendiculaires à l'axe (31) de la vanne rotative (12) .

2. Dispositif selon l'une quelconque des revendications précédentes, **caractérisé en ce que** la vanne rotative (12) comprend au moins un canal (25), qui en fonction de la position de la vanne rotative (12) est en alignement avec au moins un des deux raccords (11, 13), dans lequel le canal (25) présente avec le même angle (54) que le raccord (11, 13) par rapport à la perpendiculaire à l'axe (31) de la vanne rotative (12) .

3. Dispositif selon l'une quelconque des revendications précédentes, **caractérisé en ce que** l'angle (54) se situe dans la plage comprise entre 45° et 60°, de manière particulièrement préférée est de 45°.

4. Dispositif selon l'une quelconque des revendications précédentes, **caractérisé en ce que** les raccords (11, 13) sont disposés avec le même angle (54) de manière inclinée par rapport aux perpendiculaires de l'axe (31) et/ou sont disposés de manière décalée les uns des autres de 180° en ce qui concerne une rotation autour de l'axe (31).

5. Dispositif selon l'une quelconque des revendications précédentes, **caractérisé en ce que** la vanne rotative (12) présente au moins un recouvrement (20) pour le recouvrement du boîtier cylindrique (14) et/ou est réalisée sous la forme d'un joint à labyrinthe et/ou présente au moins une partie annulaire, dont le diamètre intérieur est supérieur au diamètre extérieur du boîtier cylindrique (14).

6. Dispositif selon l'une quelconque des revendications précédentes, **caractérisé en ce qu'**au moins un blocage (36), en particulier un blocage anti-perte (36), est prévu pour bloquer un moyen de liaison (36), en particulier un boulon, entre la vanne rotative (12) et un moyen d'entraînement actionnant la vanne rotative (12).

7. Dispositif selon l'une quelconque des revendications précédentes, **caractérisé en ce qu'**au moins un auxiliaire d'introduction (22, 38), en particulier un chanfrein d'introduction, est prévu sur le piston (16) et/ou sur le boîtier cylindrique (14) et/ou sur la vanne rotative (12).

8. Dispositif selon l'une quelconque des revendications précédentes, **caractérisé en ce qu'**au moins une saillie (17) est réalisée sur le piston (16), qui coopère avec le boîtier cylindrique (14) pour la limitation d'un mouvement du piston (16) .

9. Dispositif selon l'une quelconque des revendications précédentes, **caractérisé en ce qu'**au moins un logement (19) pour un moyen de fixation (26) est prévu.

10. Dispositif selon l'une quelconque des revendications précédentes, **caractérisé en ce qu'**au moins un méplat (30) est prévu sur le boîtier cylindrique (14).

11. Dispositif selon l'une quelconque des revendications précédentes, **caractérisé en ce que** la vanne rotative (12) présente au moins une zone d'extrémité en forme d'entonnoir pour la formation d'un espace libre (27) pour le liquide à doser.

12. Dispositif selon l'une quelconque des revendications précédentes, **caractérisé en ce qu'**au moins une protection contre l'usure du boîtier cylindrique (14) et/ou de la vanne rotative (12) et/ou du piston (16) est prévue, en particulier par des matériaux durcis et/ou revêtements en HALAR, DLC CrN, céramique ou chrome dur.
